# EUROPÄISCHE PATENTSCHRIFT

(11) **EP 1 574 395 B1**
(45) Veröffentlichungstag und Bekanntmachung des Hinweises auf die Patenterteilung: **28.03.2007**
(21) Anmeldenummer: 05002476.9
(22) Anmeldetag: 05.02.2005
(51) Int. Cl.: B60R 9/06, B60R 9/08

(54) **Heckträger für ein Kraftfahrzeug**
Rear luggage carrier for vehicle
Porte-charge arrière pour véhicule

(30) Priorität: 20.02.2004 DE 102004008530
(43) Veröffentlichungstag der Anmeldung: 14.09.2005
(73) Patentinhaber: ADAM OPEL AG, 65423 Rüsselsheim (DE)
(72) Erfinder: Weinfurtner, Sven, 55120 Mainz-Mombach (DE); Ötting, Heiko, 64653 Lorsch (DE)

(56) Entgegenhaltungen:
- DE-A1- 10 231 963
- US-A- 4 951 991
- US-A- 5 647 719
- US-A- 5 881 937
- US-B1- 6 293 451

## Beschreibung

Die Erfindung bezieht sich auf einen Heckträger für ein Kraftfahrzeug mit einem in einem karosserieseitig zu befestigenden Gestell verschiebbaren Auszug nach dem Oberbegriff des Patentanspruches 1.

Heckträger für Kraftfahrzeuge sind, z.B. als Fahrradheckträger, bekannt, deren Gestell unterhalb eines Fahrzeugbodens vorzugsweise im Bereich eines Stoßfängerabschnittes fest an dem Kraftfahrzeug installiert ist und deren Auszug schubladenartig aus einer Ruheposition in eine Gebrauchsposition herausgezogen wird.

Die DE 42 31 568 C2 offenbart einen Gepäckträger für Fahrzeuge, bei dem am Heck des Fahrzeuges im Bereich der hinteren Stoßfängereinheit eine am Fahrzeug verborgen mitgeführte Plattform zusammen mit einer darauf angeordneten Gepäckauflage in etwa in horizontale Lage bringbar und zur Lastaufnahme abstützbar ist. Die Gepäckauflage ist oberhalb fahrzeugfester Kastenträger und Stützträger, die in den Kastenträgern ein- und ausschiebbar sind, angeordnet. An freien Enden der Stützträger ist der Stoßfänger befestigt.

Aus der DE 195 38 266 A1 ist ein Heckträger bekannt, der unterhalb eines Kraftfahrzeuges aus einer Ruheposition in eine Gebrauchsposition ausziehbar und arretierbar ist. Das Herausziehen wird durch zueinander beabstandete Führungen ermöglicht. Dieser Heckträger ist insofern nachteilig, als die Führungen derart angeordnet sind, dass ein Packageraum des Auszuges zwischen den beiden Führungen durch eben diese begrenzt ist. Aufgrund der begrenzten und vorbestimmten Platzverhältnisse müssen die Anbauteile beispielsweise zum Transport von Fahrrädern, an die begrenzte Innenfläche des Auszuges angepasst sein.

Aus der US 6,293 451 B1 ist weiterhin ein Heckträger bekannt, der dem Oberbegriff des Anspruchs 1 entspricht, bei dem der Auszug mittels einer mittigen Teleskopführung in dem Gestell gelagert ist. Diese Teleskopführung ist jedoch rohrförmig und sehr kompakt ausgebildet, wobei hier keine flächige Abstützung bzw. Übertragung von Kräften und Drehmomenten von dem Auszug zum Gestell erfolgt. Um größere Kräfte und Drehmomente, die beispielsweise bei Mitnahme von mehreren Fahrrädern entstehen, aufnehmen zu können muss diese Teleskopführung entsprechend größer dimensioniert werden, was sicherlich mehr Raum am Fahrzeug beanspruchen wird.

Es ist Aufgabe der Erfindung, einen Heckträger der eingangs genannten Art zu schaffen, der mit einfachen Mitteln dahingehend verbessert wird, dass der zur Verfügung stehende Packageraum erheblich vergrößert und gleichzeitig flexibler nutzbar ist.

Erfindungsgemäß wird die Aufgabe durch die Merkmale des Patentanspruches 1 gelöst.

Aufgrund der Anordnung des Auszugs über die mittige Teleskopführung mit den Merkmalen des kennzeichnenden Teils des Patentanspruches 1 wird der Packageraum des Heckträgers zumindest durch die Teleskopführung nicht mehr begrenzt. Damit wird ein Packageraum zur Verfügung gestellt, der derart generiert werden kann, dass er über die gesamte Breite des Kraftfahrzeuges zur Verfügung steht, wodurch auch in Randbereichen des Auszuges des Heckträgers Funktionseinheiten adaptierbar sind. Zudem wird eine visuell äußerst ansprechende Lagermöglichkeit des Auszuges an dem Kraftfahrzeug erreicht.

Vorteilhafte Weiterbildungen der Erfindung sind Gegenstand der abhängigen Ansprüche.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

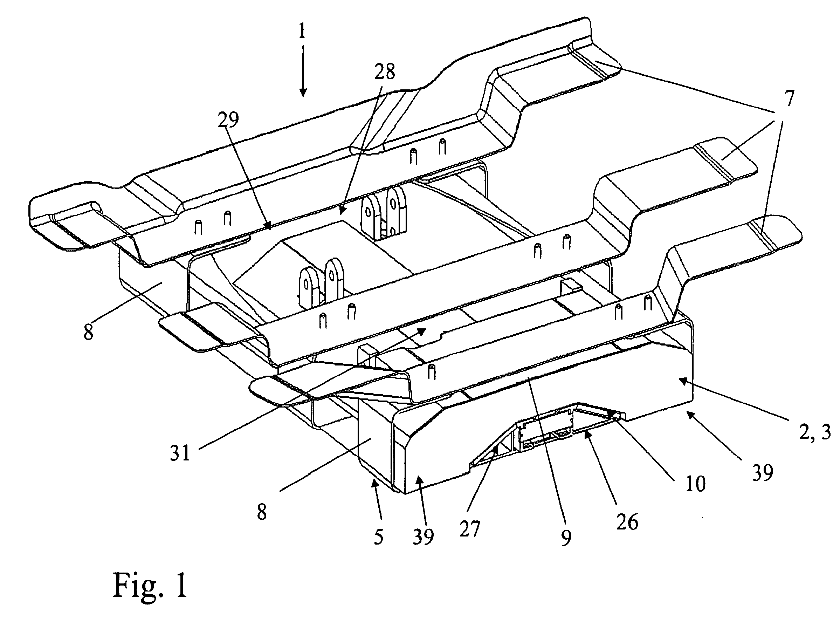

- Fig. 1: eine perspektivische Darstellung eines erfindungsgemäßen Heckträgers mit einem Auszug in einer Ruheposition,

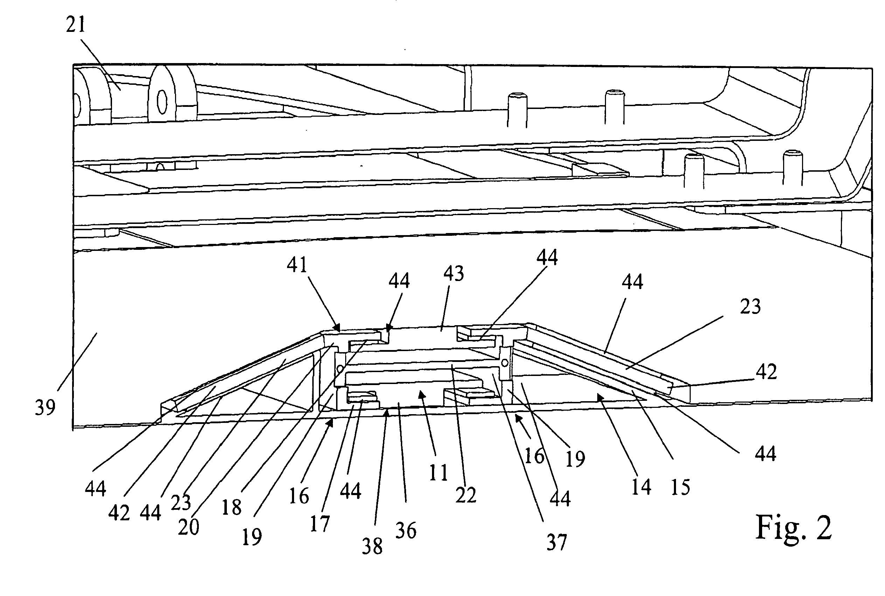

- Fig. 2: einen vergrößerten Teilquerschnitt durch den Heckträger nach Fig. 1,

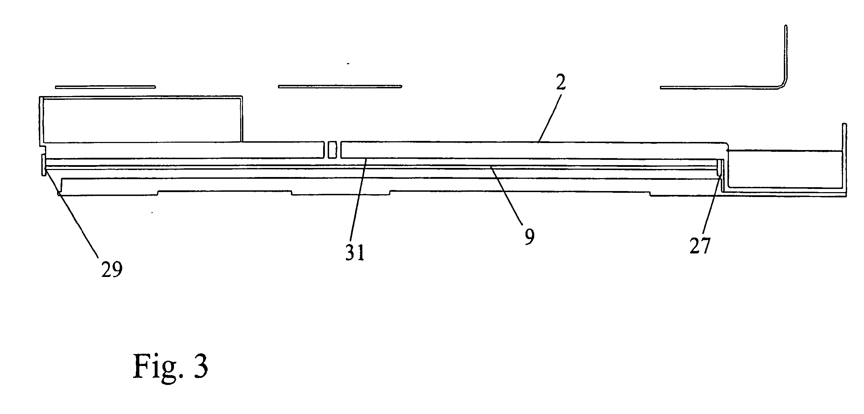

- Fig. 3: eine vergrößerte Teil-Darstellung eines Längsschnittes des Heckträgers nach Fig. 1 und

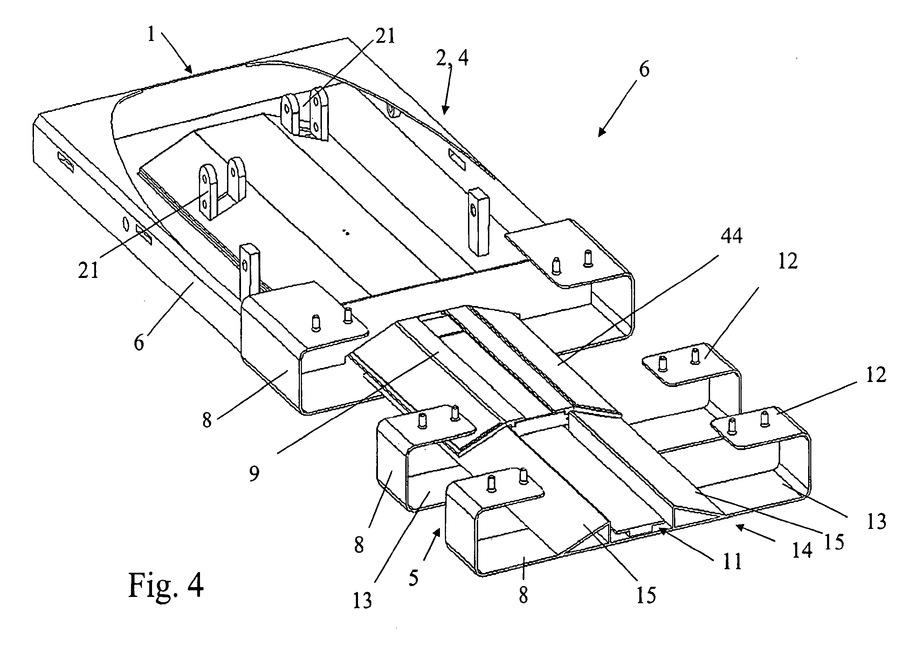

- Fig. 4: eine perspektivische Darstellung des Heckträgers nach Fig. 1 mit dem Auszug in einer Gebrauchsposition, jedoch ohne Befestigungselemente des Heckträgers.

In den unterschiedlichen Figuren sind gleiche Teile stets mit denselben Bezugszeichen versehen, weswegen diese in der Regel auch nur einmal beschrieben werden.

Der Heckträger 1 für für ein Kraftfahrzeug umfasst einen aus einer Ruheposition 3 in eine Gebrauchsposition 4 und umgekehrt überführbaren Auszug 2, der in einem karosserieseitg festzulegenden Gestell 5 mittels einer mittigen Teleskopführung 10 gelagert ist. Das Gestell 5 ist an einem Heck des Kraftfahrzeuges unterhalb eines Fahrzeugbodens über als Blechlaschen ausgebildete Befestigungselemente 7 an diesem befestigt. In der Ruheposition 3 befindet sich der Auszug 2 unterhalb des Fahrzeugbodens. Der Auszug 2 weist einen Rahmen 6 und Halteösen 21 zum Befestigen von zu transportierenden Gegenständen auf. Die Teleskopführung 10 umfasst ein Zwischenstück 9, das zum einen an dem Auszug 2 und zum anderen an dem Gestell 5 angreift.

Mit den Befestigungselementen 7 ist jeweils ein im wesentlichen C-förmiger Träger 8 des Gestells 5 über seine Befestigungslaschen 12 festgelegt. Auf den Stegen 13 der zueinander beabstandet angeordneten Träger 8 ist mittig eine Aufnahme 14 zur formschlüssigen Gleitlagerung des Zwischenstückes 9 angeordnet.

Das Zwischenstück 9 weist zwei U-förmige Grundkörper 16 mit jeweils zwei gegenüberliegenden Schenkeln 17, 18 und jeweils einem die Schenkel 17, 18 verbindenden Basissteg 19 auf, wobei die Schenkel 17, 18 der Grundkörper 16 zueinander ausgerichtet sind und die Basisstege 19 mittels eines parallel zu den Schenkeln 17, 18 verlaufenden Verstärkungssteges 22 miteinander verbunden sind. Von jedem oberen Schenkel 17 geht ein nach außen gerichteter Fortsatz 20 ab, an den sich ein schräg nach unten zu den Stegen 13 der Träger 8 verlaufender Flansch 23 anschließt. Über die gesamte Länge der beiden Flansche 23 des Zwischenstückes 9 sind oberseitige und unterseitige im Querschntt rechteckförmige Gleitlagerelemente 44 an diesen festgelegt. Im Weiteren tragen die Schenkel 17, 18 jedes Grundkörpers 16 auf den zueinander ausgerichteten Flächen jeweils ein Gleitlagerelement 44. Weiterhin ist ein erstes Anschlagblech 27 an einer vorderen Stirnseite 26 und ein zweites Anschlagblech 29 an einer hinteren Stirnseite 28 des Zwischenstückes 9 befestigt. Der Auszug 2 ist mittig mit einem Mitnehmer 31 versehen, der mit den Anschlagblechen 27, 29 zusammenwirkt.

Das Gestell 5 weist zur Lagerung des Zwischenstückes 9 die auf den Trägern 8 befestigte, weitgehend komplementär zum Zwischenstück 9 gestaltete Aufnahme 14 auf, die zwei zueinander beabstandete Auflager 15 für die Gleitlagerelemente 44 auf den Unterseiten der Flansche 23 des Zwischenstückes 9 umfasst. Zwischen den Auflagern 15 ist ein T-Profil 11 mit seinem Steg 36 auf den Stegen 13 der Träger 8 des Gestells 5 festgelegt. An der Unterseite des Fußes 37 des T-Profils 11 stützen sich die auf den unteren Schenkeln 17 der Grundkörper 16 des Zwischenstückes 9 befestigten Gleitlagerelemente 44 ab. Zwischen den unteren Schenkeln 17 des Zwischenstückes 9 und dem Steg 36 des T-Profils 11 ist jeweils ein Spalt 38 vorhanden.

Der Auszug 2 erstreckt sich in etwa über die gesamte Breite des Gestells 5 innerhalb der Träger 8 und weist an seiner Unterseite neben Randbereichen 39 einen mittigen Lagerbereich 41 auf, der an das Zwischenstück 9 angepasst ist. Der Lagerbereich 41 des Auszuges 2 umfasst zwei korrespondierend zu den Flanschen 23 des Zwischenstückes 9 verlaufende Schrägen 42, die auf den zugeordneten Gleitlagerelementen 44 des Zwischenstückes 9 aufliegen. Zwischen den gegenüberliegenden Schenkeln 18 der Grundkörper 16 des Zwischenstückes 9 verläuft eine T-Führung 43 des Auszuges 2, deren Fuß an den Gleitlagerelementen 44 der Schenkel 18 anliegt.

Die Hauptfunktion des Zwischenstückes 9 besteht darin, dass der Auszug 2 teleskopisch unter dem Kraftfahrzeugheck hervorziehbar ist. Wird der Auszug 2 von dem Heck des Kraftfahrzeuges weggezogen, so verfährt der Auszug 2 etwa über die Hälfte seiner Länge, bis der Mitnehmer 31 an dem ersten Anschlagblech 27 anliegt. Hierbei wird eine kraftschlüssige Verbindung zwischen dem Mitnehmer 31 und dem ersten Anschlagblech 27 bewirkt. Durch die kraftschlüssige Verbindung wird das Zwischenstück 9 bei der weiteren Überführung des Auszuges 2 in die Gebrauchsposition 4 zwangsweise mitgenommen. Die kraftschlüssige Kopplung bewirkt zudem, dass das Zwischenstück 9 in der Gebrauchsposition 4 des Auszuges 2 mittig zwischen dem Auszug 2 und dem Gestell 5 positioniert ist. Damit ist es möglich, auftretende Kräfte von dem Auszug 2 über das Zwischenstück 9 und das Gestell 5 in die karosseriefesten Befestigungselemente 7 zu übertragen. In der Gebrauchsposition 4 steht der Auszug 2 über die hintere Stirnseite 26 des Zwischenstückes 9 um etwa die Hälfte seiner Länge über.

Wird der Auszug 2 aus der Gebrauchsposition 4 in die Ruheposition 3 überführt, wird das Zwischenstück 9 mitgenommen, indem das zweite Anschlagblech 29 an dem Auszug 2 zur Anlage kommt. Hierzu ist das zweite Anschlagblech 29 derart an der hinteren Stirnseite 28 angeordnet, dass es über das Zwischenstück 9 hinaus parallel zur Mittelhochachse in Richtung zum Auszug 2 ragt. Zunächst wird die kraftschlüssige Kopplung des Mitnehmers 31 mit dem ersten Anschlagblech 27 gelöst, indem der Auszug 2 aus der Gebrauchsposition 3 entlang der Mittelachse in Richtung zur Ruheposition 3 verschoben wird. Der Auszug 2 verfährt nunmehr um etwa die Hälfte seiner Länge und legt sich danach endseitig an das zweite Anschlagblech 29 an, wodurch nunmehr auch das Zwischenstück 9 mitgenommen wird. In der Ruheposition 3 ist die vordere Stirnseite 26 bündig mit dem Auszug 2.

Durch die mittige Anordnung des Lagerbereichs 41 des Auszuges 2 ist es möglich, auch in den Randbereichen 39 des Auszuges 2 weitere Funktionseinheiten zu generieren.

### Bezugszeichenliste

- 1.: Heckträger
- 2.: Auszug
- 3.: Ruheposition
- 4.: Gebrauchsposition
- 5.: Gestell
- 6.: Rahmen v. 2
- 7.: Befestigungselemente
- 8.: Träger
- 9.: Zwischenstück
- 10.: Teleskopführung
- 11.: T-Profil
- 12.: Befestigungslaschen
- 13.: Steg
- 14.: Aufnahme
- 15.: Auflager
- 16.: Grundkörper
- 17.: Schenkel v. 16
- 18.: Schenkel v. 16
- 19.: Basissteg
- 20.: Fortsatz
- 21.: Halteöse
- 22.: Verstärkungssteg
- 23.: Flansch
- 24.:
- 25.:
- 26.: vordere Stirnseite
- 27.: erstes Anschlagblech
- 28.: hintere Stirnseite
- 29.: zweites Anschlagblech
- 30.:
- 31.: Mitnehmer
- 32.:
- 33.:
- 34.:
- 35.:
- 36.: Steg
- 37.: Fuß
- 38.: Spalt
- 39.: Randbereich v. 2
- 40.:
- 41.: Lagerbereich v. 2
- 42.: Schräge
- 43.: T-Führung
- 44.: Gleitlagerelement

## Patentansprüche

1. Heckträger für ein Kraftfahrzeug mit einem in einem karosserieseitig zu befestigenden Gestell (5) verschiebbaren Auszug (2), der mittels einer mittigen Teleskopführung (10) in dem Gestell (5) gelagert ist, die ein Zwischenstück (9) umfasst, das zum einen an dem Auszug (2) und zum anderen an dem Gestell (5) angreift und zwei U-förmige Grundkörper (16) aufweist, deren Schenkel (17, 18) zueinander ausgerichtet sind, **dadurch gekennzeichnet, dass** die Basisstege der (19) Schenkel (17, 18) mittels eines parallel zu den Schenkeln (17, 18) verlaufenden Verstärkungssteges 22 miteinander verbunden sind, wobei von jedem oberen Schenkel (17) ein nach außen gerichteter Fortsatz (20) abgeht, an den sich ein schräg nach unten verlaufender Flansch (23) anschließt.

2. Heckträger nach Anspruch 1, **dadurch gekennzeichnet, dass** das Zwischenstück (9) über eine formschlüssige Gleitlagerung sowohl mit dem Auszug (2) als auch mit dem Gestell (5) verbunden ist.

3. Heckträger nach Anspruch 2, **dadurch gekennzeichnet, dass** über die gesamte Länge der beiden Flansche (23) des Zwischenstückes (9) oberseitige und unterseitige im Querschnitt rechteckförmige Gleitlagerelemente (44) an diesen festgelegt sind.

4. Heckträger nach Anspruch 3, **dadurch gekennzeichnet, dass** die Schenkel (17, 18) jedes Grundkörpers (16) auf den zueinander ausgerichteten Flächen jeweils ein Gleitlagerelement (44) tragen.

5. Heckträger nach einem der Ansprüche 1 bis 4, **dadurch gekennzeichnet, dass** das Zwischenstück (9) an einer vorderen Stirnseite (26) ein erstes Anschlagblech (27) und an einer hinteren Stirnseite (26) ein zweites Anschlagblech (29) trägt, wobei der Auszug (2) mittig mit einem mit den Anschlagblechen (27, 29) zusammenwirkenden Mitnehmer (31) versehen ist.

6. Heckträger nach einem der Ansprüche 1 bis 5, **dadurch gekennzeichnet, dass** das Gestell (5) zur Lagerung des Zwischenstückes (9) eine Aufnahme (14) aufweist, die zwei zueinander beabstandete Auflager (15) für die Gleitlagerelemente (44) auf den Unterseiten der Flansche (23) des Zwischenstückes (9) umfasst.

7. Heckträger nach Anspruch 6, **dadurch gekennzeichnet, dass** zwischen den Auflagern (15) ein T-Profil (11) derart an dem Gestell (5) festgelegt ist, dass sich an der Unterseite des Fußes (37) des T-Profils (11) die auf den unteren Schenkeln (17) der Grundkörper (16) des Zwischenstückes (9) befestigten Gleitlagerelemente (44) abstützen.

8. Heckträger nach einem der Ansprüche 1 bis 7, **dadurch gekennzeichnet, dass** der Auszug (2) einen mittigen an das Zwischenstück (9) angepassten Lagerbereich (41) aufweist.

9. Heckträger nach Anspruch 8, **dadurch gekennzeichnet, dass** der Lagerbereich (41) des Auszuges (2) zwei korrespondierend zu den Flanschen (23) des Zwischenstückes (9) verlaufende Schrägen (42) umfasst, die auf den zugeordneten Gleitlagerelementen (44) des Zwischenstückes (9) aufliegen.

10. Heckträger nach Anspruch 8 oder 9, **dadurch gekennzeichnet, dass** in der Mitte des Lagerbereiches (41) des Auszuges (2) eine T-Führung (43) zwischen den gegenüberliegenden Schenkeln (18) der Grundkörper (16) des Zwischenstückes 9 verläuft, deren Fuß an den Gleitlagerelementen (44) der Schenkel (18) anliegt.

## Claims

1. Rear luggage carrier for a motor vehicle with a pull-out device (2) which can be displaced in a frame (5) to be fastened on the body side and which is mounted in the frame (5) by means of a central telescopic guide (10) which comprises an intermediate piece (9) which engages, on the one hand, the pull-out device (2) and, on the other hand, the frame (5) and has two U-shaped base bodies (16), legs (17, 18) of which are aligned with respect to one another, **characterised in that** the base webs (19) of the legs (17, 18) are connected to one another by means of a reinforcement web (22) extending parallel to the legs (17, 18), an outwardly directed extension (20), adjoined by a flange (23) extending obliquely downwardly, coming off each upper leg (17).

2. Rear luggage carrier according to claim 1, **characterised in that** the intermediate piece (9) is connected by means of a form-locking sliding bearing arrangement both to the pull-out device (2) and to the frame (5).

3. Rear luggage carrier according to claim 2, **characterised in that** over the entire length of the two flanges (23) of the intermediate piece (9), upper and lower sliding bearing elements (44), which are rectangular in cross-section, are fixed thereto.

4. Rear luggage carrier according to claim 3, **characterised in that** the legs (17, 18) of each base body (16) carry a respective sliding bearing element (44) on the faces which are aligned with respect to one another.

5. Rear luggage carrier according to any one of claims 1 to 4, **characterised in that** the intermediate piece (9) carries a first stop plate (27) on a front end face (26) and a second stop plate (29) on a rear end face (26), the pull-out device (2) being provided centrally with an entrainment means (31) cooperating with the stop plates (27, 29).

6. Rear luggage carrier according to any one of claims 1 to 5, **characterised in that**, to mount the intermediate piece (9), the frame (5) has a receiver (14), which comprises two supports (15) which are spaced apart from one another for the sliding bearing elements (44) on the lower sides of the flanges (23) of the intermediate piece (9).

7. Rear luggage carrier according to claim 6, **characterised in that** a T-profile (11) is fixed to the frame (5) between the supports (15) in such a way that the sliding bearing elements (44) fastened to the lower legs (17) of the base body (16) of the intermediate piece (9) are supported on the lower side of the foot (37) of the T-profile (11).

8. Rear luggage carrier according to any one of claims 1 to 7, **characterised in that** the pull-out device (2) has a central bearing region (41) adapted to the intermediate piece (9).

9. Rear luggage carrier according to claim 8, **characterised in that** the bearing region (41) of the pull-out device (2) comprises two bevels (42) extending correspondingly to the flanges (23) of the intermediate piece (9), which bevels rest on the associated sliding bearing elements (44) of the intermediate piece (9).

10. Rear luggage carrier according to claim 8 or 9, **characterised in that** in the centre of the bearing region (41) of the pull-out device (2), a T-guide (43) extends between the opposing legs (18) of the base body (16) of the intermediate piece (9), the foot of which rests on the sliding bearing elements (44) of the legs (18).

## Revendications

1. Porte-charges arrière pour un véhicule automobile comportant une rallonge (2) susceptible de subir une translation dans un châssis (5) à fixer du côté carrosserie, la rallonge étant montée dans le châssis (5) au moyen d'un guidage télescopique (10) central et comprenant une pièce intermédiaire (9) agissant, d'une part, sur la rallonge (2) et, d'autre part, sur le châssis (5) et présentant deux corps de base (16) en forme de U, dont les branches (17, 18) sont alignées l'une par rapport à l'autre, **caractérisé en ce que** les nervures de base (19) des branches (17, 18) sont reliées ensemble au moyen d'une nervure de renforcement (22) s'étendant parallèlement aux branches (17, 18), et **en ce que** de chaque branche supérieure (17) part un prolongement (20) orienté vers l'extérieur, auquel se raccorde un rebord (23) s'étendant obliquement vers le bas.

2. Porte-charges arrière selon la revendication 1, **caractérisé en ce que** la pièce intermédiaire (9) est reliée, par l'intermédiaire d'un montage coulissant à liaison à ajustement de forme, tant à la rallonge (2), qu'également au châssis (5).

3. Porte-charges arrière selon la revendication 2, **caractérisé en ce que** sur la totalité de la longueur des deux rebords (23) de la pièce intermédiaire (9) du côté supérieur et du côté inférieur, sont fixés sur celle-ci des éléments de palier à glissement (44) à section transversale de forme rectangulaire.

4. Porte-charges arrière selon la revendication 3, **caractérisé en ce que** les branches (17, 18) de chaque corps de base (16) portent chacune un élément de palier à glissement (44) sur les surfaces alignées les unes par rapport aux autres.

5. Porte-charges arrière selon l'une des revendications 1 à 4, **caractérisé en ce que** la pièce intermédiaire (9) porte, sur une face frontale (26) avant, une première tôle de butée (27) et, sur une face frontale (26) arrière, une deuxième tôle de butée (29), la rallonge (2) étant munie d'un organe d'entraînement (31) coopérant avec les tôles de butée (27, 29).

6. Porte-charges arrière selon l'une des revendications 1 à 5, **caractérisé en ce que** le châssis (5) présente, pour le montage en palier de la pièce intermédiaire (9), un logement (14), comprenant deux reposoirs (15) espacés l'un de l'autre pour les éléments de palier à glissement (44), sur les faces inférieures des rebords (23) de la pièce intermédiaire (9).

7. Porte-chargess arrière selon la revendication 6, **caractérisé en ce qu'**un profil en T (11) est fixé entre les reposoirs (15) sur le châssis (5), de manière que les éléments de palier à glissement (44), fixés sur les branches inférieures (17) des corps de base (16) de la pièce intermédiaire (9), prennent appui en face inférieure du pied (3 7) du profil en T (11).

8. Porte-charges arrière selon l'une des revendications 1 à 7, **caractérisé en ce que** la rallonge (2) présente une zone de palier (41), adaptée centralement à la pièce intermédiaire (9).

9. Porte-charges arrière selon la revendication 8, **caractérisé en ce que** la zone de palier (41) de la rallonge (2) comprend deux rampes (42) s'étendant en correspondance aux rebords (23) de la pièce intermédiaire (9) et qui reposent sur les éléments de palier à glissement (44) associés de la pièce intermédiaire (9).

10. Porte-charges arrière selon la revendication 8 ou 9, **caractérisé en ce que**, au centre de la zone de palier (41) de la rallonge (2), s'étend, entre les branches (18) opposées des corps de base (16) de la pièce intermédiaire (9), un guidage en T (43) dont le pied appuie sur les éléments de palier à glissement (44) des branches (18).
